# EUROPEAN PATENT APPLICATION

(11) **EP 1 657 354 A1**
(43) Date of publication of application: **17.05.2006**
(21) Application number: 04746904.4
(22) Date of filing: 02.07.2004
(51) Int. Cl.: D06M 15/21, B05D 7/20, B05D 1/02, B05D 7/24, C09J 4/00

(54) **MANUFACTURING METHOD FOR TIRE CORD AND ADHESIVE MATERIAL FOR TIRE CORD**

(30) Priority: 21.08.2003 JP 2003297247
(71) Applicant: Bridgestone Corporation, Tokyo 104-8340 (JP)
(72) Inventor: GIZA, Emil, c/o BRIDGESTONE CORPORATION, Kodaira-shi, Tokyo 1878531 (JP)
(74) Representative: Whalley, Kevin
(86) International application number: PCT/JP2004/009435
(87) International publication number: WO 2005/019520

(57) **Abstract**

There is provided a novel production method for a tire cord capable of suppressing the use of a diluent accompanying the fuming of harmful substances and energy consumption. The production of a tire cord 7 comprising a twisted cord 6 and an adhesive layer for rubber on the surface of the twisted cord 6 is **characterized by** comprising a step of spraying an adhesive material onto the twisted cord 6 for coating. A coating apparatus 1 can be used. The coating apparatus 1 comprises a plurality of coaters 2 for spraying an adhesive onto the surface of the twisted cord 6. The coater 2 comprises a coating nozzle and a coating guide. The coating apparatus 1 further comprises an interlacer 3, a low speed pump 4 and an adhesive tank 5 filled with the adhesive.

## Description

### TECHNICAL FIELD

This invention relates to a method of producing a tire cord comprising a twisted cord and an adhesive layer for rubber coated on the surface of the twisted cord and an adhesive material for a tire cord used therefor.

### BACKGROUND ART

As a reinforcement for various rubber articles inclusive of a tire are frequently used organic fibers. Particularly, the reinforcement in the tire is mainly a twisted cord made from the organic fiber.
In order to sufficiently develop the reinforcing property for rubber, the adhesion property between the twisted cord and rubber is important. For this end, the adhesive for rubber is applied onto the surface of the twisted cord.

In the twisted cord is existent a complicated surface, e.g. irregularity based on the twisting of cord filaments or the like. Therefore, in the conventional technique of applying the adhesive is used an adhesive having a low viscosity. In order to adjust the viscosity of the adhesive, it is required to use a diluent such as water, an organic solvent or the like. The diluted adhesive (e.g. resolcin-formalin latex (RFL) treating solution, which is referred to as "RFL" simply) is applied onto the cord through dipping means. The extra amount of RFL is removed by adjusting the adhesion amount through squeeze rolls or a vacuum. After the diluent is evaporated, the adhesive is crosslinked through heat or a light (see JP-A-2001-164468 and WO02/094962).

### DISCLOSURE OF THE INVENTION

### TASK TO BE SOLVED BY THE INVENTION

In case of the adhesive having a low viscosity, there is caused no problem in the dipping treatment (hereinafter referred to as "DIP" simply) of the twisted cord and the impregnation into the inside of the cord, but there is a problem that a harmful substance included in the adhesive emits smoke accompanied with the evaporation of the diluent such as solvent or the like. Also, time and energy for the drying are required for removing the diluent in the adhesive. From this standpoint, it is preferable to remove the diluent.

However, the inventor has found that when a coating material having a high viscosity is used in the conventional DIP process or brushing process, there is caused a problem that a thin and uniform adhesive layer can not be formed on the surface of the twisted cord and the penetrability into the inside of the cord is poor.

It is an object of the invention to provide a novel method of producing a tire cord which can control the use of a diluent accompanied with the fuming and energy consumption of a harmful substance.

### MEANS FOR SOLVING TASK

According to the invention, there is the provision of a method of producing a tire cord comprising a twisted cord and an adhesive layer for rubber coated on the surface of the twisted cord, which comprises a step of coating the twisted cord by spraying an adhesive material.

The invention is based on a discovery that an adhesive having a high viscosity or an adhesive material such as a coating agent or the like can be efficiently and uniformly applied onto the surface of the twisted cord for a tire by spraying.

### EFFECT OF THE INVENTION

According to the production method of the tire cord of the invention, the adhesive material can be uniformly applied onto the twisted cord irrespectively of the viscosity of the adhesive material, so that the use of a diluent accompanied with the fuming and energy consumption of a harmful substance can be controlled.

### BRIEF DESCRIPTION OF THE DRAWINGS

FIG. 1 is a perspective view of a coating apparatus according to an embodiment of the invention;
FIG. 2 is a perspective view of an apparatus for producing a tire cord according to an embodiment of the invention;
FIG. 3 is photographs for comparing a tire cord obtained by the method of the invention with those obtained by the conventional method;
FIG. 4 is a perspective view of an apparatus for producing a tire cord according to another embodiment of the invention;
FIG. 5 is a plan view of a three-way UV irradiating machine used in the apparatus for producing the tire cord shown in FIG. 4; and
FIG. 6 is a perspective view of an apparatus for producing a tire cord according to the other embodiment of the invention.

### BEST NODE FOR CARRYING OUT THE INVENTION

### (1) Tire cord

The tire cord comprises a twisted cord and an adhesive layer for rubber coated on the surface of the twisted cord. The tire cord is adhered with a rubber mixture to be adhered and can be used as a ply material such as a carcass ply or the like or a belt material.

The rubber mixture to be adhered is not particularly limited, and can use various rubber compoundings. As a rubber component, for example, are mentioned natural rubber; conjugated diene synthetic rubbers such as polyisoprene synthetic rubber (IR), polybutadiene rubber (BR), styrene-butadiene copolymer rubber (SBR), acrylonitrile-butadiene rubber (NBR), chloroprene rubber (CR), butyl rubber (IIR) and the like; ethylene-propylene copolymer rubber (EPM), ethylene-propylene-diene copolymer rubber (EPDM), polysiloxane and so on. Among them, natural rubber and conjugated diene synthetic rubber are preferable. Also, the rubbers may be used in a combination of two or more.

The vulcanization of the rubber mixture can be carried out by using as a vulcanizing agent sulfur; a thiuram polysulfide compound such as tetramethylthiuram disulfide, dipentamethylenethiuram tetrasulfide or the like; 4,4-dithiomorpholine; p-quinone dioximum; p-p'-dibenzoquinone dioximum; cyclic sulfur imide; or a peroxide.

### Particularly, sulfur is preferable.

Also, the rubber mixture may be properly compounded with various fillers and additives usually used in the rubber industry such as carbon black, silica, aluminum hydroxide, vulcanization accelerator, antioxidant, softening agent and the like in addition to the above components. Further, composites with particles, fibers, cloths or the like of various materials may be used.

### (2) Twisted cord

The twisted cord is made from various organic fibers. The twisted cord used in the tire is not particularly limited, but it is preferably made from a polyester such as polyethylene terephthalate (hereinafter referred to as "PET" simply) or an organic fiber of nylone or the like.

### (3) Adhesive layer for rubber

It can be made from various adhesive materials. Particularly, it can be formed by directly spraying an adhesive material having a high viscosity of, for example, 50-3000 mPa·s onto the surface of the twisted cord. In the conventional technique, DIP solution having a low viscosity has been used, but the adhesive material having a high viscosity is not used as it is.

An undercoat layer (primer layer) may be provided on at least a part of the twisted cord. Preferably, the undercoat layer has a thickness of 1-10 µm. The undercoat layer may also be formed by directly spraying an adhesive material having a high viscosity of, for example, 50-3000 mPa·s onto the surface of the twisted cord. Preferably, the adhesive layer for rubber is applied onto the undercoat layer formed on at least a part of the twisted cord.

### (4) Spraying

It is means used in a step of coating the twisted cord with the adhesive material. Even in the adhesive material having a high viscosity, the surface of the twisted cord can be covered efficiently by the spraying. The conventional DIP solution has a viscosity of 1-10 mPa·s. Typically, the viscosity is about 2 mPa·s. Such a low viscosity adhesive material can form a sufficiently thin and uniform adhesive layer even through the DIP treatment. However, the adhesive material having a high viscosity is required to take special means such as a coating device or the like. Particularly, the adhesive material is applied to the twisted cord at a uniform thickness by the spraying itself.

In the spraying can be used a coating device for fibers such as coating nozzle, coating guide or the like. Particularly, a device used in the application of a lubricant for fiber at the fiber producing step can be utilized.

After the spraying, the coating of the adhesive material onto the twisted cord is preferably uniformized by using an interlacer or an air blowing device such as a blow nozzle or the like. In the interlacer, turbulent flow is generated by air blow blown in the inside of the interlacer, whereby the coating of the adhesive material can be uniformized during the pass of the twisted cord through the interlacer. On the other hand, air blow is generated by the blow nozzle, whereby the coating of the adhesive material on the twisted cord exposed to the air blow can be uniformized.

Also, the high viscosity adhesive material applied can be dispersed thinly and uniformly on the twisted cord or impregnated into the inside of the twisted cord by the air blow or turbulent flow. In the air blow or turbulent flow, not only air but also an inert gas such as nitrogen or the like can be used.

In the spraying, the predetermined amount of the adhesive material is supplied by a pump. When the high viscosity adhesive material is used in the twisted cord, it is important to apply only the predetermined amount from the beginning. In order to apply only the predetermined amount, it is preferable to use a low-speed pump. Moreover, a lubricant is over-flowed in the method or apparatus used in the fiber manufacturing factory without using a pump for the adjustment of flow rate because the lubricant has a low viscosity (1-10 mPa·s).

### (5) Adhesive material

It is made from various adhesive compositions. Particularly, an adhesive composition having a viscosity of 50-3000 mPa·s can be used. Various well-known adhesive compositions may be used for a rubber adhering layer and an undercoat layer. For example, an adhesive composition disclosed in WO02/094962 and ultraviolet or radiation curable adhesive composition can be used.

### (6) Adhesive composition

As a first adhesive composition can be used an adhesive composition containing (A) a conjugated diene polymer having a weight average molecular weight of 500-100,000 and (B) a basic compound having an electron pair donor property.

The conjugated diene polymer as a component (A) may include a conjugated diene homopolymer, a conjugated diene copolymer, and a modified polymer thereof. As the conjugated diene monomer are mentioned 1,3-butadiene, isoprene, 1,3-hexadiene and the like, and among them 1,3-butadiene is preferable. As the conjugated diene copolymer is preferable a conjugated diene-aromatic vinyl copolymer. As the aromatic vinyl monomer are mentioned styrene, α-methylstyrene and the like, and among them styrene is preferable. Also, the main chain of the conjugated diene polymer is preferable to contain as a unit of a molecular chain carbon-carbon double bond easily forming a crosslink site in the crosslinking reaction with sulfur and having a hydrogen atom in allyl site. As the conjugated diene polymer are mentioned polyisoprene, polybutadiene, styrene-butadiene copolymer, isoprene-butadiene copolymer and the like. Also, the conjugated diene polymer is preferable to be liquid at a temperature in the compounding of the adhesive composition, particularly even below 0°C in view of the workability and the easiness at the mixing step of the adhesive composition, and also is preferable to be liquid even at a temperature above 50°C and small in the vapor pressure. Even if the conjugated diene polymer is not liquid at the temperature in the compounding of the adhesive composition, it is not particularly limited as far as the conjugated diene polymer becomes liquid state in the adhesive composition.

Further, there may be used a modified polymer obtained by introducing a functional group having a radical-polymerizable unsaturated double bond into a terminal of the conjugated diene polymer. As such a functional group are mentioned vinyl group, acryloyl group, methacryloyl group, acryloyloxy group, methacryloyloxy group, allyl group and the like. As the modified polymer are particularly preferable ones obtained by introducing an acryloyl group, a methacryloyl group, an acryloyloxy group or a methacryloyloxy group into the terminal of the butadiene polymer. The modified polymer includes an acrylated polybutadiene, a methacrylated polybutadiene and so on.

The basic compound having an electron pair donor property as a component (B) may be a nitrogen-containing compound having unpaired electrons or a compound produced by thermally decomposing the compound having a structure of unpaired electron.

As the nitrogen-containing compound having unpaired electrons may be mentioned (a) aromatic amines, (b) aldehydeamine, (c) guanidines, (d) thioureas, (e)heterocyclic amines and (f) amine compounds of polymerizable monomer and the like containing an aliphatic amine residue or a heterocyclic amine residue and having a carbon-carbon double bond.

As the aromatic amine (a) are mentioned amino group-containing aromatic compounds such as aniline, m-phenylene diamine, 2,4-toluylene diamine and the like. As the aldehydeamine (b) are mentioned n-butylaldehyde aniline and the like. As the guanidine (c) are mentioned diphenyl guanidine, diorthotolyl guanidine and the like. As the thiourea (d), thiocarbanilide, diethyl thiourea, tetramethyl thiourea and the like. As the heterocyclic amine (e) are mentioned compounds having a nitrogen-containing heterocycle such as pyridine, 2-methyl imidazole and the like.

As the polymerizable monomer (f) are mentioned at least one compound selected from the group consisting of 2-vinylpyridine, 4-vinylpyridine, m-(N,N-dimethylamino)styrene, p-(N,N-dimethylamino)styrene, acrylamide, metahcrylamide, N-methyl acrylamide, N-isopropyl acrylamide, N-n-butyl acrylamide, N-n-octyl acrylamide, N,N-dimethyl acrylamide, 1-vinyl imidazole, allylamine, 2,5-distyryl pyridine, 2-dimethylaminoethyl methacrylate, N-vinyl-2-pyrilidone, 2-vinyl-2H-indazole, 4-diisopropylamino-1-butene, trans-2-butene-1,4-diamine, 2-vinyl-4,6-diamino-1,3,5-triazine, 4-methyl-5-vinyl thiazole, N-vinylformasmide, N,N-dimethylaminoethyl acrylate, N,N-dimethylaminopropyl acrylamide, acryloyl morpholine, N,N-diethyl acrylamide and the like.

In addition to the aforementioned compounds, (g) aliphatic amines and (h) amine compounds other than the above (a)-(g) may be used as the nitrogen-containing compound having unpaired electrons. As the aliphatic amine (g) are mentioned an aliphatic monoamine such as dibutylamine or the like; a diamine such as ethylene diamine or the like; a high molecular weight amine such as polyethylene polyamine or the like; and so on. As the amine compound (h) is mentioned a substituted amine compound obtained by substituting a primary or secondary amino group through acrylation or methacrylation.

As a compound producing the compound having a structure of unpaired electrons through thermal decomposition is preferable a well-known vulcanization accelerator. For example, there is mentioned a disulfide compound such as tetramethylthiuram disulfide or the like. Moreover, the compound producing the compound having a structure of unpaired electrons through thermal decomposition is preferable to be decomposed at a vulcanization temperature of 130-180°C in the vulcanization treatment for adhesion.

A reaction heat curve of a mixture consisting of 100 parts by mass of an adhesive composition and 3 parts by mass of sulfur such as cyclic sulfur (S) (measured by a differential scanning calorimeter at a temperature rising rate of 5°C/min) indicates a reaction heat peak accompanied with the vulcanization reaction at a temperature zone of not higher than 190°C, which is not observed in a reaction heat curve of a mixture consisting of 100 parts by mass of the above conjugated diene polymer (A) and 3 parts by mass of sulfur.

The amount of the component (B) added is dependent upon the electron pair donor property of the base, but is preferably 0.2-50 parts by mass per 100 parts by mass of the component (A). The adhesive composition may contain the following component (C) [30-80 parts by mass based on 100 parts by mass of the component (A)] and/or component (d) [3-60 parts by mass based on 100 parts by mass of the component (A)], if necessary.

Also, the adhesive composition may be a second adhesive composition containing the following component (E) [preferably 30-80 parts by mass based on 100 parts by mass of the component (A)] and/or component (F) [preferably 3-60 parts by mass based on 100 parts by mass of the component (A)] instead of the component (B) in the first adhesive composition.

The component (C) is a compound having not less than 3, usually 3-8 functional groups capable of crosslinking through ultraviolet ray or radiation irradiation in one molecule. As such a compound is preferable a compound (E) having three or more of acryloyloxy group, methacryloyl group or functional group represented by the following formula (I): 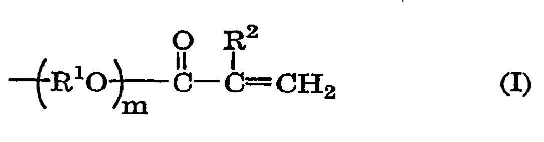 (wherein R¹ is an alkylene group having a carbon number of 2-5, preferably ethylene group or propylene group, and R² is a hydrogen atom or an alkyl group having a carbon number of 1-3, preferably hydrogen atom or methyl group, and m is an integer of 0-5, preferably 1-3) in one molecule. Particularly, a compound having the functional group of the formula (I) is preferable. As the compound having 3 or more of acryloyloxy group or metachryloyl group in one molecule is mentioned, for example, an ester of a polyvalent alcohol having 3 or more valency with acrylic acid or methacrylic acid. As the polyvalent alcohol are preferably used glycerin, trimethylol ethane, trimethylol propane, diglycerin, penthaerythritol, dipentaerythritol and the like. As the compound having 3 or more functional groups of the formula (I) are mentioned pentaerythritol polyetoxyacrylate, pentaerythritol polypropoxyacrylate, dipentaerythritol polyacrylate and the like.

As the compound (C) may be used a novolac type phenolic resin obtained by modifying with acryloyl group or methacryloyl group.

The component (D) is a viscosity adjusting agent or a compound having one or two functional groups capable of conducting radical polymerization through ultraviolet ray or radiation irradiation, and is preferable to be a monofunctional or bifunctional liquid compound. As such a compound is preferable a compound (F) having 1 or 2 acryloyloxy groups or methacryloyloxy groups in one molecule, particularly a polyoxyalkylene derivative. As the monofunctional compound are mentioned, for example, phenoxypolyethylene gltcol monoacrylate, tetrahydrofulfuryl monoacrylate, isooctyl monoacrylate and the like. As the bifunctional compound are mentioned polypropylene glycol diacrylate, polypropylene glycol dimethacrylate and the like.

The adhesive composition may be properly mixed with a low viscosity liquid having a radical reactivity in accordance with the necessity of further working.

The adhesive composition may contain at least one additive selected from the group consisting of an epoxy compound, an inorganic filler and a high molecular weight filler in an amount in total of 10-40 parts by mass based on 100 parts by mass of the component (A).

As the epoxy compound are mentioned a novolac type epoxy resin obtained by epoxidizing a condensate of a pnemol and formaldehyde, a novolac type phenolic resin obtained by introducing an epoxy group or a (metha)acrlyl group into the condensate of phenol and formaldehyde, and so on. As a commercially available product thereof are mentioned epoxy novolac acrylate, novolac acrylate and the like.

As the inorganic filler are mentioned clay, silica, talc, carbon black and the like. As the clay, montmorilonite clay is commercially available. As the high molecular weight filler are mentioned, for example, a copolymer of isobutylene and maleic anhydride, a modified polybutadiene, a modified acrylonitrile-butadiene copolymer and the like. As a commercially available product thereof are mentioned an amino group-modified acrylonitrile-butadiene copolymer, a carboxyl group-modified acrylonitrile-butadiene copolymer and so on.

In the second adhesive composition, it is preferable to compound a photoinitiator such as 2,4-diethylthioxanthone, p-dimethylaminobenzoic isoamylester or the like in an amount of 0.1-10 parts by mass based on 100 parts by mass of the component (A). Further, each of sulfur (e.g. sulfur powder) and a vulcanization accelerator (e.g. mercaptobenzothiazole, disulfide, peroxide or the like) may be compounded in an amount of 0.1-3 parts by mass based on 100 parts by mass of the component (A).

### (7) Composite of tire cords and rubber mixture

The tire cords are adhered with the rubber mixture, which can be used as a composite such as ply member for carcass ply, belt member or the like.

The adhesive layer for rubber is made of the first adhesive composition containing the above base having an electron pair donor property [component (B)]. In a composite formed by adhering such an adhesive layer for rubber with the rubber mixture containing sulfur, when a count quantity of sulfur atoms in a section perpendicular to the adhered face through a fluorescent X-ray is measured by an X-ray analysis through an electron microscope, the sulfur count quantity in the adhesive layer for rubber becomes larger than an average distribution of the sulfur count quantity in the adhered rubber.

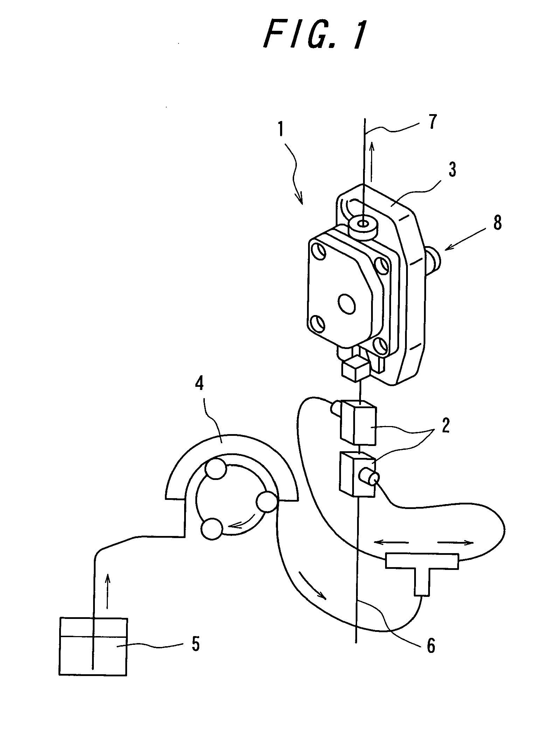

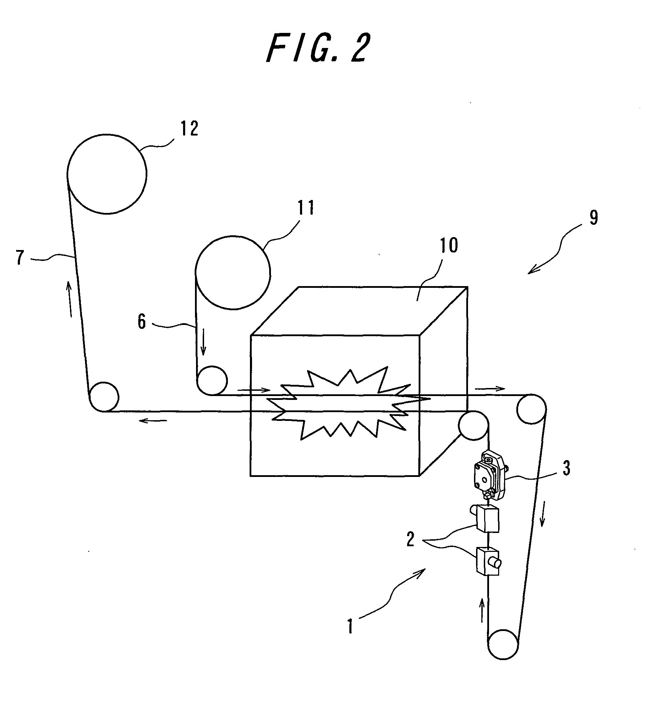

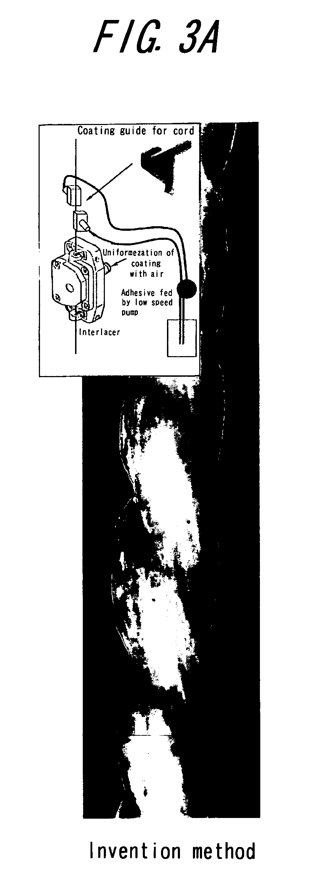

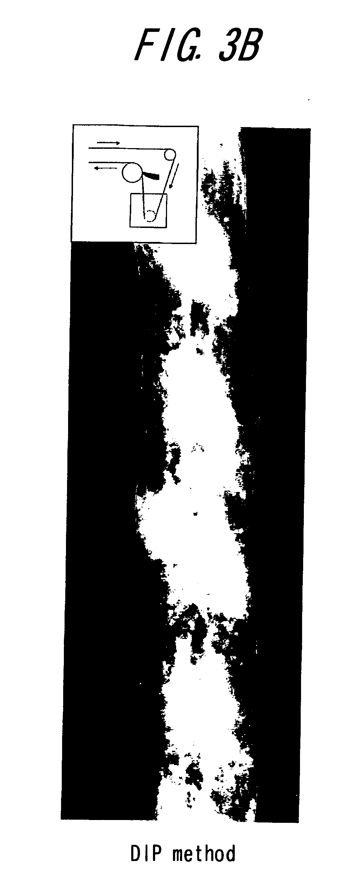

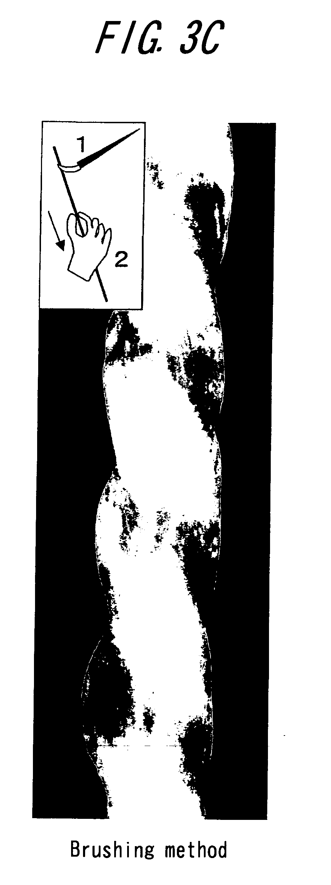

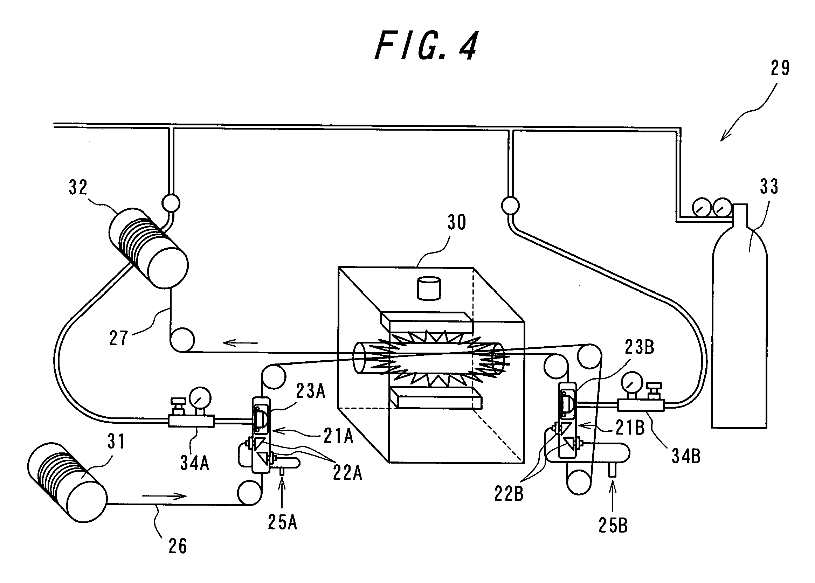

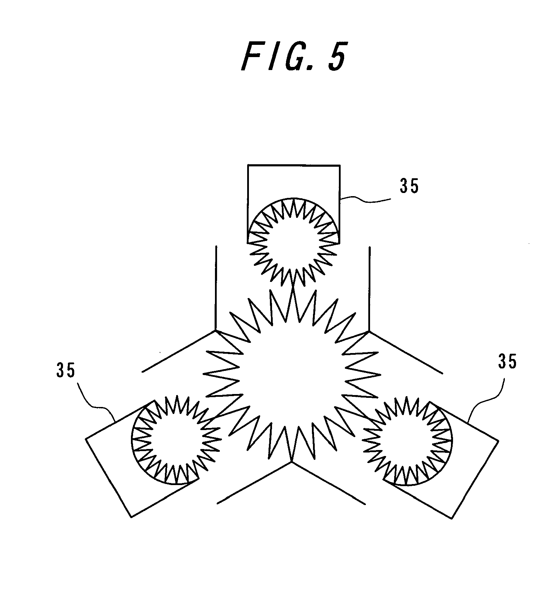

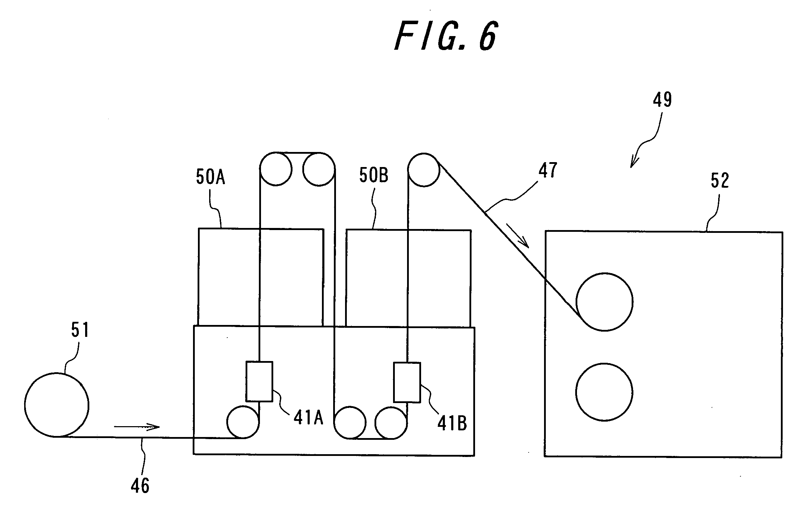

The invention is explained in detail with reference to the drawings. FIG. 1 is a perspective view of a coating apparatus according to an embodiment of the invention. FIG. 2 is a perspective view of an apparatus for producing a tire cord according to an embodiment of the invention. FIG. 3 is photographs for comparing a tire cord obtained by the method of the invention with those obtained by the conventional method. FIG. 4 is a perspective view of an apparatus for producing a tire cord according to another embodiment of the invention. FIG. 5 is a plan view of a three-way UV irradiating machine used in the apparatus for producing the tire cord shown in FIG. 4. FIG. 6 is a perspective view of an apparatus for producing a tire cord according to the other embodiment of the invention.

### (8) Coating apparatus

As shown in FIG. 1, there can be used a coating apparatus 1. The coating apparatus 1 comprises a coater 2 for spraying an adhesive onto a surface of a twisted cord. The coater 2 can be constituted in a combination of two or more. The coater 2 may be provided with a coating nozzle and a coating guide. Furthermore, the coating apparatus may comprise an interlacer 3, a low-speed pump 4 and an adhesive tank 5 filled with an adhesive.

When a twisted cord 6 before the application of the adhesive is passed through the coater 2, the adhesive 5 transferred by the low speed pump 4 is sprayed onto the surface of the twisted cord 6 to be coated. The twisted cord 6 coated with the adhesive 5 after the pass through the coater 2 is passed through the interlacer 3. An air 8 is fed into an inside of the interlacer 3 to generate a turbulent flow, whereby the adhesive 5 can be uniformly dispersed on the twisted cord 6. The twisted cord 6 after the pass through the interlacer 3 renders into an adhesive-coated twisted cord 7 in which the coating of the adhesive 5 becomes uniform.

### (9) Production apparatus for tire cords

As shown in FIG. 2, the coating apparatus 1 can be incorporated into an apparatus 9 for producing tire cords. The production apparatus 9 for tire cords is provided with a UV irradiating machine 10. The twisted cord 6 before the coating is taken out from a winder 11, and the twisted cord 7 after the coating is taken up on a winder 12.

The adhesive layer made of the aforementioned adhesive composition is subjected to an irradiation of a ultraviolet ray or a radiation. The radiation includes an electron ray, a gamma ray or the like and is irradiated by a known method. In case of using the first adhesive composition, the irradiation of ultraviolet ray or radiation can be omitted.

FIG. 3 is photomicrographs, in which FIG. 3A shows a tire cord obtained by the method of the invention, FIG. 3B shows a tire cord obtained by the DIP method and FIG. 3C shows a tire cord obtained by the brushing method. As seen from this figure, in the tire cord obtained by the method of the invention as compared with the tire cords obtained by the DIP and brushing methods, the adhesive layer is formed at a uniform thickness.

As shown in FIG. 4, there can be used an apparatus 29 for producing tire cords. The production apparatus 29 is a UV continuous treating apparatus for a single wire, which comprises a first layer coating device 21A and a second layer coating device 21B. The first layer and second layer coating devices 21A, 21B comprise first layer coater 22a and second layer coater 22B and interlacers 23A and 23B, respectively. A twisted cord before the coating is continuously coated with an adhesive material 25A for the first layer and an adhesive material 25B for the second layer to form a twisted cord 27 after the coating.

The adhesive material 25A for the first layer and the adhesive material 25B for the second layer after the coating can be treated by a UV irradiating machine 30. In the UV irradiating machine 30 can be used three-way UV lamps 35 as shown in FIG. 5.

The production apparatus 29 comprises a steel cylinder 33 for feeding air to the interlacers 23A, 23B and valves 34A, 34B. The coater is provided with a coating nozzle and a coating guide not shown. The adhesive materials for the first and second layers can be fed to the coaters through a low speed pump. As winders 31 and 32 can be used the same as used in FIG. 3.

As shown in FIG. 6, there can be used an apparatus 49 for producing tire cords. In this apparatus 49 are used a first layer coating device 41A, a second layer coating device 41B, and UV irradiating machines 51A, 51B. A twisted cord before the coating from a winder 51 is coated with the first layer and passed through the UV irradiating machine 51A, and then coated with the second layer and passed through another UV irradiating machine 51B, and thereafter a twisted cord 47 after the formation of two adhesive layers is taken up on a winder 52. Each of the coating devices may comprise a coater provided with a coating nozzle and a coating guide and an interlacer likewise FIGS. 2 and 4.

### EXAMPLE 1

The following examples and comparative example will be described in detail with reference to the drawings. By using the coating apparatus as shown in FIG. 1 and the production apparatus as shown in FIG. 2 are produced tire cords. A high viscosity UV-curable adhesive is applied to the tire cord. As to the technique on UV adhesion refer the above explanation and the description of WO02/094962.

An adhesive solution having a high viscosity (50-3000 mPa·s) is fed through a low speed pump to a coating device (coating nozzle and coating guide). The adhesive solution is sprayed onto the surface of the twisted cord and uniformized by air blow. As an air blowing device is used an interlacer.

As the low speed pump is used a multi-tubing pump (PHU-1/COU-3, made by Azuwann Co., Ltd.), and as the coating guide is used a yarn oiling guide (B307013, made by Yuasa Itomichi Kogyo Co., Ltd.), and as the air blowing device is used an interlacer (Y-698, made by Yuasa Itomichi Kogyo Co., Ltd.).

As the twisted cord is used PET cord, which is treated under conditions that a treating rate is 4 m/min and a coating amount of the adhesive is 5 mass% per 100 mass% of PET and a speed of the low speed pump is 20 revolutions/min.

A state of applying the adhesive to the tire cord is shown in FIG. 3. In the tire cord obtained in this example, the adhesive layer is formed at a uniform thickness as compared with the cords obtained by DIP method and brushing method using a high viscosity adhesive. The adhesive layer in the tire cord of this example is a homogeneous coating layer equal to the case of applying a low viscosity adhesive.

By controlling the coating amount of the high viscosity adhesive solution and dispersing through air blow can be formed a uniform coating on the surface of the twisted cord and attained the proper impregnation into the inside of the twisted cord. Although an apparatus for applying a lubricant in the fiber manufacturing factory is applied to the coating of the adhesive, as shown in this example, it is important to control the coating amount by using the low speed pump or the like to apply only the predetermined amount from the beginning. EXAMPLE "

A tire cord is prepared by using the production apparatus as shown in FIGS. 4 and 5. An adhesive material for the first layer and an adhesive material for the second layer are applied continuously. In the UV irradiating portion is used a three-way UV irradiation. The twisted cord is reciprocatedly moved at a winding speed of 0-50 m/min, and the interlacers and low speed pump are used. The uniform coating of the adhesive layer for rubber is conducted likewise Example 1.

### EXAMPLE 3

By using the production apparatus as shown in FIG. 6 is prepared a tire cord. After the coating of the first layer and after the coating of the second layer are used individual UV irradiating machines, respectively. The treating rate is 40 m/min, and the interlacers and low speed pump are used. In order to evaluate the substitutability with the conventional DIP step, there are used common winders and the like.

The uniform coating of the adhesive layer for rubber is conducted likewise Example 1. The tire cords obtained in this example are applicable as a ply member, a belt member or the like. In the evaluation of the substitutability with the conventional DIP step, a diluent for decreasing the viscosity is useless, so that the influence on the environment is less and there is no loss in the time and energy for the drying and the like.

### INDUSTRIAL APPLICABILITY

The method of producing tire cords according to the invention is useful for efficiently coating the twisted cord with the adhesive material. Particularly, by the production method of the tire cord according to the invention can be coated the twisted cord with the adhesive material at a high viscosity state, so that the fuming of harmful substance and the use of the diluent accompanying the energy consumption can be suppressed.

## Claims

1. A method of producing a tire cord comprising a twisted cord and an adhesive layer for rubber coated on the surface of the twisted cord, which comprises a step of coating the twisted cord by spraying an adhesive material.

2. A method of producing a tire cord according to claim 1, which comprises a step of uniformizing the coating of the adhesive material on the twisted cord through an interlacer or a blow nozzle after the spraying.

3. A method of producing a tire cord according to claim 1 or 2, wherein a predetermined amount of the adhesive material is fed by a pump in the spraying.

4. A method of producing a tire cord according to any one of claims 1 to 3, wherein the adhesive material has a viscosity of 50-3000 mPa·s.

5. A method of producing a tire cord according to any one of claims 1 to 4, wherein the adhesive material is an adhesive composition containing (A) a conjugated diene polymer having a weight average molecular weight of 500-100,000 and (B) a basic compound having an electron pair donor property.

6. A method of producing a tire cord according to claim 5, wherein the adhesive composition contains the basic compound having the electron pair donor property (B) in an amount of 0.2-50 parts by mass based on 100 parts by mass of the conjugated diene polymer (A).

7. A method of producing a tire cord according to claim 5 or 6, wherein a reaction heat curve of a mixture consisting of 100 parts by mass of an adhesive composition and 3 parts by mass of sulfur such as cyclic sulfur (S) (measured by a differential scanning calorimeter at a temperature rising rate of 5°C/min) indicates a reaction heat peak accompanied with the vulcanization reaction at a temperature zone of not higher than 190°C, which is not observed in a reaction heat curve of a mixture consisting of 100 parts by mass of the above conjugated diene polymer (A) and 3 parts by mass of sulfur.

8. A method of producing a tire cord according to any one of claims 1 to 7, wherein in a composite formed by adhering such an adhesive layer for rubber with the rubber mixture containing sulfur, when a count quantity of sulfur atoms in a section perpendicular to the adhered face through a fluorescent X-ray is measured by an X-ray analysis through an electron microscope, the sulfur count quantity in the adhesive layer for rubber becomes larger than an average distribution of the sulfur count quantity in the adhered rubber.

9. A method of producing a tire cord according to any one of claims 5 to 8, wherein the adhesive composition further contains (C) a compound having three or more functional groups capable of crosslinking through a ultraviolet ray or radiation irradiation in one molecule and/or (D) a compound having one or two functional groups capable of conducting radical polymerization through a ultraviolet ray or radiation irradiation.

10. A method of producing a tire cord according to any one of claims 5 to 9, wherein a terminal group of the conjugated diene polymer (A) is vinyl group, acryloyl group, methacryloyl group, acryloyloxy group, methacryloyloxy group or allyl group.

11. A method of producing a tire cord according to any one of claims 5 to 10, wherein a terminal group of the conjugated diene polymer (A) is acryloyloxy group or methacryloyloxy group.

12. A method of producing a tire cord according to any one of claims 5 to 11, wherein the basic compound having an electron pair donor property (B) is a nitrogen-containing compound having unpaired electrons or a compound produced by thermally decomposing the compound having a structure of unpaired electron.

13. A method of producing a tire cord according to claim 12, wherein the nitrogen-containing compound having unpaired electrons is an amine compound or a polymerizable monomer containing an aliphatic amine residue or a heterocyclic amine residue and having carbon-carbon double bond.

14. A method of producing a tire cord according to claim 13, wherein the amine compound is an aliphatic amine, an aromatic amine, an aldehyde amine, a guanidine, a thiourea or a heterocyclic amine.

15. A method of producing a tire cord according to claim 14, wherein the aliphatic amine is dibutylamine, ethylene diamine or polyethylene polyamine, and the aromatic amine is aniline, m-phenylene diamine or 2,4-toluylene diamine, and the aldehyde amine is n-butylaldehyde aniline, and the guanidine is dipheyl guanidiene or diorthotolyl guanidine, and the thiourea is thiocarbanilide, diethyl thiourea or tetramethyl thiourea, and the heterocyclic amine is pyridine or 2-methyl imidazole.

16. A method of producing a tire cord according to claim 13, wherein the polymerizable monomer is at least one compound selected from the group consisting of 2-vinylpyridine, 4-vinylpyridine, m-(N,N-dimethylamino)styrene, p-(N,N-dimethylamino)styrene, acrylamide, metahcrylamide, N-methyl acrylamide, N-isopropyl acrylamide, N-n-butyl acrylamide, N-n-octyl acrylamide, N,N-dimethyl acrylamide, 1-vinyl imidazole, allylamine, 2,5-distyryl pyridine, 2-dimethylaminoethyl methacrylate, N-vinyl-2-pyrilidone, 2-vinyl-2H-indazole, 4-diisopropylamino-1-butene, trans-2-butene-1,4-diamine, 2-vinyl-4,6-diamino-1,3,5-triazine, 4-methyl-5-vinyl thiazole, N-vinylformasmide, N,N-dimethylaminoethyl acrylate, N,N-dimethylaminopropyl acrylamide, acryloyl morpholine and N,N-diethyl acrylamide.

17. A method of producing a tire cord according to any one of claims 12 to 16, wherein the compound having a structure of unpaired electrons is thermally decomposed to form a compound as a vulcanization accelerator.

18. A method of producing a tire cord according to any one of claims 12 to 16, wherein the compound produced by thermal decomposition of the compound having a structure of unpaired electrons is tetramethylthiuram disulfide.

19. A method of producing a tire cord according to any one of claims 9 to 18, wherein the compound (C) is included in an amount of 30-80 parts by mass based on 100 parts by mass of the conjugated diene polymer (A).

20. A method of producing a tire cord according to any one of claims 9 to 19, wherein the compound (C) is a novolac type phenolic resin modified with acryloyl group and/or methacryloyl group.

21. A method of producing a tire cord according to any one of claims 5 to 20, wherein the adhesive composition further contains at least one additive selected from the group consisting of an epoxy compound, an inorganic filler and a high molecular weight filler.

22. A method of producing a tire cord according to any one of claims 1 to 4, wherein the adhesive material is a ultraviolet ray or radiation curable adhesive composition comprising (A) a conjugated diene polymer having a weight average molecular weight of 500-100,000, (E) a compound having three or more of acryloyloxy group, methacryloyl group or functional group represented by the following formula (I): 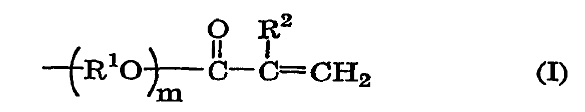 (wherein R¹ is an alkylene group having a carbon number of 2-5, and R² is a hydrogen atom or an alkyl group having a carbon number of 1-3, and m is an integer of 0-5) in one molecule, and (F) a compound having one or two acryloyloxy groups or methacryloyloxy groups.

23. A method of producing a tire cord according to claim 22, wherein a terminal group of the conjugated diene polymer (A) is vinyl group, acryloyl group, methacryloyl group, acryloyloxy group, methacryloyloxy group or allyl group.

24. A method of producing a tire cord according to claim 22 or 23, wherein a terminal group of the conjugated diene polymer (A) is acryloyloxy group or methacryloyloxy group.

25. A method of producing a tire cord according to any one of claims 22 to 24, wherein 30-80 parts by mass of the compound (E) and 3-60 parts by mass of the compound (F) are included based on 100 parts by mass of the conjugated diene polymer (A).

26. A method of producing a tire cord according to any one of claims 22 to 25, wherein the ultraviolet ray or radiation curable adhesive composition further contains at least one additive selected from the group consisting of an epoxy compound, an inorganic filler, a high molecular weight filler and a basic compound.
